**Europäisches Patentamt**

**European Patent Office**

**Office européen des brevets**

(19)

(11) Numéro de publication : **0 012 679**
**B1**

(12)

# FASCICULE DE BREVET EUROPÉEN

(45) Date de publication du fascicule du brevet :
**13.10.82**

(21) Numéro de dépôt : **79400982.9**

(22) Date de dépôt : **06.12.79**

(51) Int. Cl.³ : **C 03 C 17/23**, B 05 B 13/04,
C 03 C 17/25

(54) **Dispositif de dépôt d'un film d'oxydes métalliques sur la surface d'un verre plat.**

(30) Priorité : **06.12.78 JP 151406/78**

(43) Date de publication de la demande :
**25.06.80 (Bulletin 80/13)**

(45) Mention de la délivrance du brevet :
**13.10.82 Bulletin 82/41**

(84) Etats contractants désignés :
**BE DE FR GB IT LU NL SE**

(56) Documents cités :
**FR A 2 211 411**
**FR A 2 277 785**
**FR A 2 306 176**
**FR A 2 308 600**
**US A 3 964 432**

(73) Titulaire : **SAINT-GOBAIN INDUSTRIES**
**62, Bd Victor Hugo**
**F-92209 Neuilly sur Seine (FR)**

(72) Inventeur : **Mitsuno, Hideo**
**2-404 2-Chome Nigawa-cho**
**Nishinomiya-shi Hyogo-ken (JP)**
Inventeur : **Fujimoto, Katsuchi**
**1-7 Aobadai Ichihara**
**Chiba-Ken (JP)**
Inventeur : **Hisamoto, Chiharu**
**1-7 Aobadai Ichihara**
**Chiba-Ken (JP)**

(74) Mandataire : **Eudes, Marcel et al**
**Saint-Gobain Recherche 39 Quai Lucien Lefranc**
**F-93304 Aubervilliers Cedex (FR)**

Imprimerie Jouve, 18, rue St-Denis, 75001 Paris, France

# Dispositif de dépôt d'un film d'oxydes métalliques sur la surface d'un verre plat

La présente invention concerne un dispositif utilisé pour déposer un film renfermant au moins un oxyde métallique sur la surface d'un verre plat afin d'en colorer la surface, en améliorer les caractéristiques optiques, par exemple accroître l'indice de réfraction, ou la rendre conductrice. Plus précisément, elle porte sur un dispositif de dépôt d'un film d'oxydes métalliques sur la surface d'un verre plat, conçu pour que l'on puisse pulvériser des composés métalliques sur la surface d'un ruban de verre plat en mouvement, au moyen de pistolets animés d'un mouvement de va-et-vient dans la direction transversale par rapport à la direction d'entraînement de ce ruban et désigné ci-après direction de la largeur du ruban, de sorte que ces composés se transforment en un film d'oxydes métalliques par décomposition thermique, à sa surface, et que l'on puisse évacuer par aspiration les composés métalliques en excédent et les gaz usés dégagés par cette décomposition.

Que ce dispositif fût équipé d'une seule ou de plusieurs rangées d'ajutages espacés dans la direction d'entraînement du ruban, il n'y avait jusqu'ici que deux bouches d'aspiration, placées l'une en amont, l'autre en aval de l'appareil.

Il en résultait que les courants de pulvérisation des divers ajutages se perturbaient mutuellement dans l'espace de pulvérisation balayé par ces ajutages et entouré par la paire de bouches d'aspiration, de sorte que le film déposé était susceptible de présenter des irrégularités dans la direction d'entraînement du ruban, et que des courants produits dans la direction de la largeur du verre plat par le mouvement de va-et-vient des ajutages perturbaient les courants de pulvérisation, ce qui faisait que le film obtenu était susceptible d'avoir des irrégularités dans la direction de la largeur du ruban : en fin de compte il existait des variations d'épaisseur d'un endroit à un autre.

La présente invention a pour but de fournir un dispositif de dépôt d'un film d'oxydes métalliques sur la surface d'un ruban de verre plat, capable de déposer un film uniforme sur toute la surface du ruban aussi bien dans la direction d'entraînement de celui-ci, que dans la direction de sa largeur, et éliminant les défauts inhérents aux dispositifs classiques.

Ce dispositif comprend un convoyeur continu entraînant le ruban à haute température, des pistolets en mouvement de va-et-vient transversalement à la direction d'entraînement du ruban et munis de plusieurs ajutages espacés dans cette direction d'entraînement pour pulvériser sur la surface du verre des composés métalliques décomposables thermiquement en un film d'oxydes métalliques, et un dispositif d'évacuation de gaz qui aspire près de la surface du ruban les composés métalliques en excédent et les gaz de décomposition dégagés au fur et à mesure de leur pulvérisation.

Selon l'invention, l'espace de pulvérisation formé par les ajutages est divisé en plusieurs sous-espaces, dans la direction d'entraînement du verre plat, par des bouches d'aspirations appartenant au dispositif d'évacuation des gaz et installées dans l'intervalle des ajutages.

De préférence, chacun des ajutages se situe dans un sous-espace indépendant, doté d'une paire de bouches d'aspiration en amont et en aval. De ce fait, c'est de façon indépendante que les composés métalliques en excédent et les gaz usés dégagés par la décomposition des composés métalliques pulvérisés par chaque ajutage sont évacués. Il en résulte que le courant de pulvérisation de chaque ajutage n'est plus perturbé par les autres et que l'on peut obtenir un film régulier dans la direction d'entraînement du ruban.

D'autre part, en cloisonnant chaque espace, on peut supprimer l'influence des courants produits par le va-et-vient de chaque ajutage dans la direction de la largeur du verre plat sur son propre jet ainsi que les perturbations mutuelles qui en résultaient, de façon à obtenir aussi un film régulier dans la direction de la largeur du ruban ; ceci permet d'obtenir une régularité générale des caractéristiques optiques, de la conductivité, etc... sur la surface du verre et conduit à un meilleur rendement de production.

Les applications de cette intervention sont illustrées ci-dessous par des dessins :

La figure 1   est une vue longitudinale en élévation de l'ensemble.

La figure 2   est une vue de face en élévation.

La figure 3   est une vue en plan à plus grande échelle de la partie essentielle.

La figure 4   est une coupe selon IV-IV de la figure 3.

La figure 5   est une coupe selon V-V de la figure 3.

La figure 6   est un schéma d'un autre exemple.

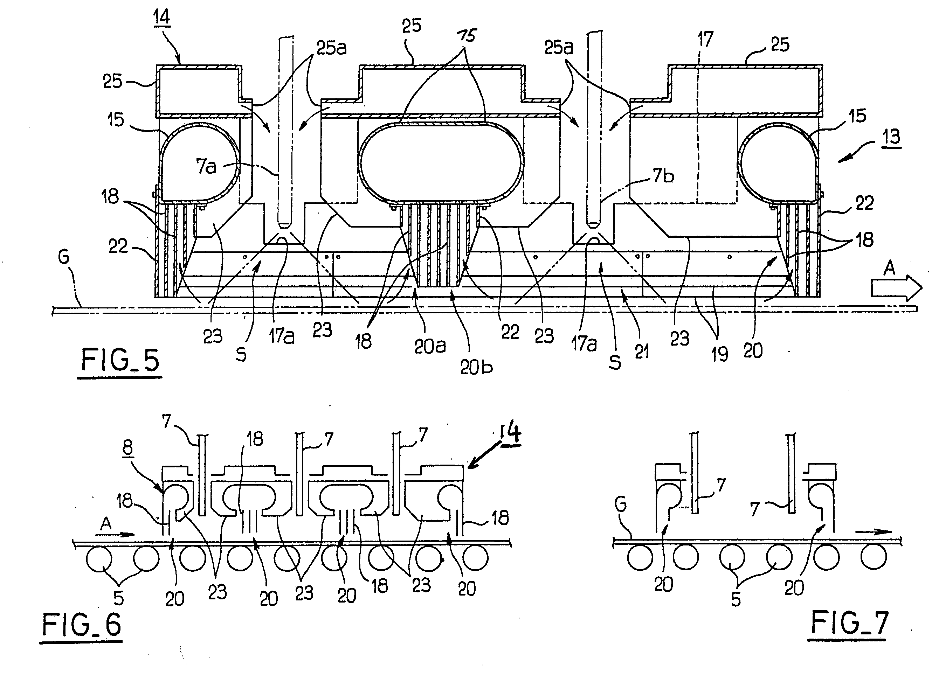

Enfin, la figure 7   est un schéma d'un appareil classique.

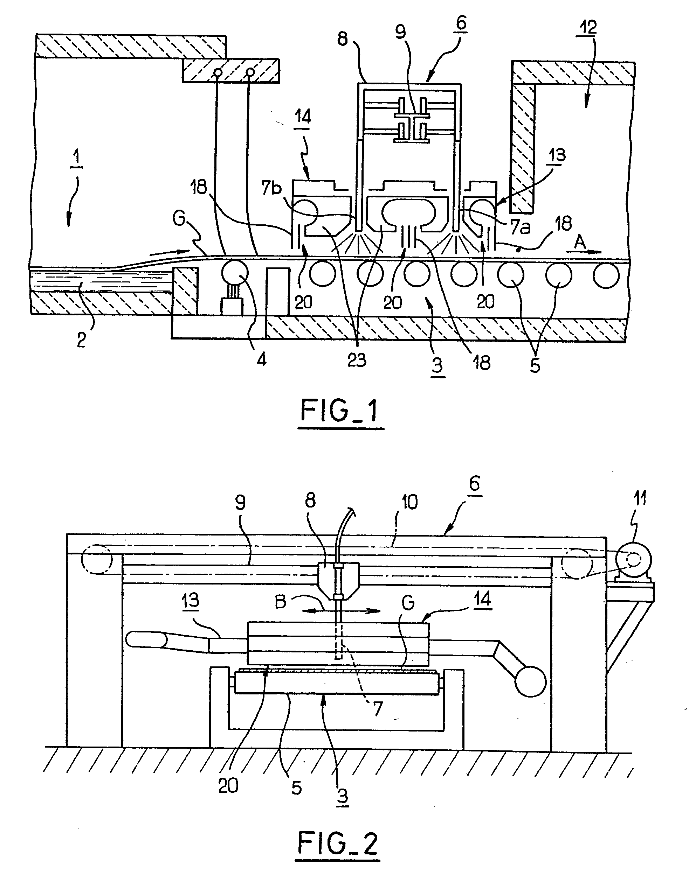

Les figures 1 et 2 représentent un four 1 de flottage de verre fondu sur un bain métallique 2 et un convoyeur 3, constitué d'un rouleau d'extraction 4 qui soulève le ruban de verre plat G à haute température à sa sortie du bain 2 et de plusieurs rouleaux transporteurs 5 qui l'entraînent continuellement vers une étenderie.

Le dispositif de pulvérisation 6 est placé au-dessus du ruban G en aval du rouleau extracteur 4. Il comprend des pistolets de pulvérisation de composés métalliques, équipés d'ajutages 7 situés en deux positions 7a, 7b, espacées dans la direction d'entraînement A du ruban G et permet leur va-et-vient dans la direction B (désigné ci-après la direction de la largeur du verre plat) perpendiculaire à la direction d'entraînement A du ruban.

Les ajutages 7 précités sont fixés au bout de tuyaux d'alimentation en solution de composés métalliques supportés ainsi que des tuyaux d'alimentation d'air de pulvérisation (non figurés) par un caisson 8 en forme de C qui va et vient sur un rail 9 monté au-dessus du ruban G et dans la direction B de la largeur de celui-ci.

Le caisson 8 est entraîné sur le rail 9 par une chaîne 10 reliée à un moteur 11.

La solution de composés métalliques pulvérisée par les ajutages 7 sur la surface du verre plat G à haute température se transforme par décomposition thermique en un film d'oxydes métalliques. L'étenderie que traverse ensuite le ruban de verre plat G revêtu de ce film d'oxydes métalliques est représentée en 12.

Des organes d'aspiration 13 évacuent les gaz usés dégagés par la décomposition de la solution de composés métalliques pulvérisée et l'excédent de cette solution. Des organes d'admission d'air chaud 14 servent à introduire cet air chaud dans l'espace de pulvérisation des ajutages 7 afin d'y maintenir constante la température.

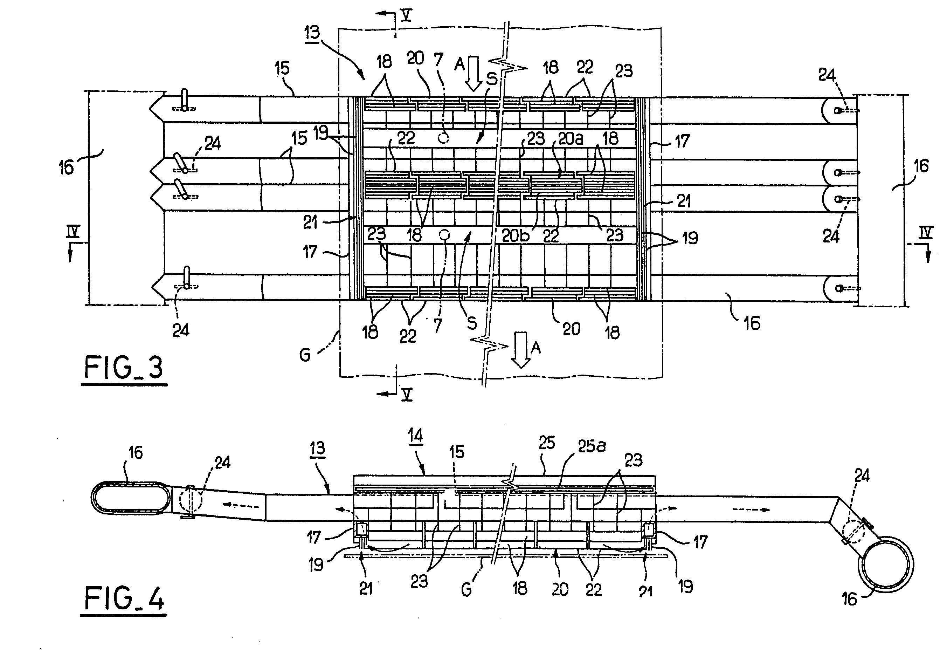

Comme le montrent les figures 3 à 5, les organes d'évacuation des gaz 13 précités consistent en :
— des graines primaires 15 d'évacuation des gaz, disposées dans la direction de la largeur du ruban, reliées par des gaines de liaison 16 et situées d'une part en amont de l'ajutage d'amont 7a, d'autre part en aval de l'ajutage d'aval 7b, enfin dans la région comprise entre ces deux ajutages ;
— deux gaines secondaires 17 d'évacuation des gaz reliées aux extrémités des gaines primaires 15, gaines secondaires situées au-dessus du ruban, sur les côtés, dans la direction d'entraînement de celui-ci, et,
— des buses parallèles formées par des plaques de bois 18, 19 en dessous de chaque gaine primaire 15 et de chaque gaine secondaire 17, qui servent de bouches d'aspiration 20 et 21 des gaz brûlés et de l'excédent de solution.

Parmi les buses d'aspiration, le groupe d'aval et la partie aval 20b du groupe central entourent l'ajutage d'aval 7b, le groupe d'amont et la partie amont 20a du même groupe central entourent l'ajutage d'amont 7a. Autrement dit, l'espace de pulvérisation balayé par les ajutages 7a, 7b est divisé en deux espaces plus petits dans la direction d'entraînement A, chacun de ces sous-espaces correspondant à un ajutage 7.

Le long de chaque gaine 15 ou 17, les plaques de bois 18 sont incorporées dans des coffrets indépendants 22 dont ceux du milieu sont communs aux plaques formant les bouches 20a et 20b.

Chaque coffret porte en saillie vers l'un des sous-espaces S précités des plaques de séparation 23 qui divisent chacun d'eux en plusieurs compartiments, empêchant le mouvement de chacun des ajutages 7 de créer des courants capables de perturber dans la direction de la largeur B sa propre pulvérisation, voire celle de l'autre.

Un registre 24 est installé à chaque extrémité de chacune des gaines primaires 15. L'ouverture de ce registre est réglée automatiquement suivant les résultats de mesure de la température et de la concentration des gaz usés dans chaque sous-espace S.

Des dégagements 17a sont prévus dans les gaines d'évacuation secondaires 17 pour le passage des ajutages 7.

Le dispositif d'admission d'air chaud 14 est constitué d'une gaine d'air chaud 25, montée au-dessus de chaque gaine d'évacuation primaire 15 du dispositif d'évacuation des gaz 13 et ayant des bouches de projection 25a en face de chaque sous-espace S.

La figure 6 concerne une mise en œuvre selon laquelle trois ajutages 7 sont montés en parallèle dans la direction d'entraînement.

Des bouches d'aspiration sont installées, comme indiqué dans l'exemple précité, respectivement en aval de l'ajutage d'aval, entre les ajutages et en amont de l'ajutage d'amont. Autrement dit, l'espace de pulvérisation formé par les ajutages est divisé en trois dans la direction d'entraînement A et dans chaque sous-espace S existe un ajutage. Des plaques séparatrices 23 contre les courants perturbateurs existent aussi dans ce cas ; de même si l'on installait plus de quatre ajutages en série : de toute manière, chacun des espaces S occupé par un ajutage 7 est séparé des autres et subdivisé par des plaques séparatrices 23, de sorte que le jet de chaque ajutage n'est plus perturbé ni par les jets voisins ou leur mouvement, ni par des courants produits dans la direction de la largeur B par son propre mouvement alternatif.

A titre comparatif, la figure 7 montre sommairement la structure d'un dispositif classique. On y voit un convoyeur à rouleaux 5 entraînant un ruban de verre plat (G) à la sortie d'un four de flottage 1 et des pistolets munis d'ajutages 7 espacés dans la direction A d'entraînement du ruban ainsi qu'une simple paire de bouches d'aspiration 20 entourant ces ajutages.

Divers essais ont confirmé que le film d'oxydes métalliques déposé selon l'invention sur la surface du ruban G est uniforme : les irrégularités de couleur ou de teinte dans la direction de la largeur B et les piqûres rencontrées avec des appareils classiques sont supprimés ou deviennent très rares ainsi les caractéristiques optiques et la conductivité sont régulières sur toute la surface.

D'autre part, on notera qu'il est également possible de pulvériser les composés métalliques en poudre et non à l'état liquide.

## Revendications

1. Dispositif de dépôt d'un film d'oxydes métalliques sur la surface d'un verre plat, ce dispositif comprenant un convoyeur entraînant continuellement un ruban de verre plat à haute température, des pistolets animés d'un mouvement de va-et-vient transversal par rapport à la direction d'entraînement de ce ruban et dont les ajutages sont répartis à un certain intervalle dans la direction en question pour pulvériser sur le ruban des composés métalliques décomposables thermiquement en un film d'oxydes métalliques, équipé également d'organes d'évacuation de gaz usés situés près de la surface dudit ruban, caractérisé en ce que l'espace de pulvérisation est divisé en plusieurs sous-espaces par des bouches d'aspiration transversales placées non seulement (20) en amont et en aval des ajutages, dans la direction (A) d'entraînement du ruban (G) mais aussi (20a, 20b) dans leur intervalle.

2. Dispositif de dépôt d'un film d'oxydes métalliques sur la surface d'un verre plat, selon la revendication 1, caractérisé par des plaques séparatrices longitudinales (23) réparties à intervalles fixés le long d'une direction (B) perpendiculaire à la direction (A) d'entraînement du ruban pour subdiviser transversalement les espaces de pulvérisation.

3. Dispositif de dépôt d'un film d'oxydes métalliques sur la surface d'un verre plat, selon l'une des revendications 1 et 2, caractérisé en ce que chacune des bouches d'aspiration (20, 21) est formée par des plaques de bois (18) fixées en parallèle à faible espacement.

## Claims

1. Device for depositing a film of metal oxides on the surface of flat glass, said device comprising a conveyor continuously driving a ribbon of flat glass a high temperature, spray guns driven in a to and fro movement transverse to the direction of driving of said ribbon and of which the nozzles are separated by a certain interval in the direction in question to spray on to the ribbon metal compounds which are thermally decomposable to a film of metal oxides, also provided with members for removal of waste gas situated close to the surface of said ribbon, characterised in that the space for spraying is divided into a plurality of sub-spaces by transverse aspiration openings placed not only (20) upstream and downstream of the nozzles, in the direction (A) of driving of the ribbon (G) but also (20a, 20b) between them.

2. Device for depositing a film of metal oxides on the surface of flat glass, according to claim 1, characterised by longitudinal separating plates (23) distributed at fixed intervals along a direction (B) perpendicular to the direction (A) of driving of the ribbon to subdivide transversally the spaces for spraying.

3. Device for depositing a film of metal oxides on the surface of flat glass, according to one of claims 1 and 2, characterised in that each of the aspiration openings (20, 21) is formed by wooden sheets (18) fixed parallel to each other at a small spacing.

## Ansprüche

1. Vorrichtung zum Auftragen eines Metalloxidfilms auf die Oberfläche von Flachglas mit einem ein Flachglasband von hoher Temperatur kontinuierlich transportierenden Förderer, mit Spritzpistolen, die quer zur Transportrichtung des Flachglasbandes eine Hin- und Herbewegung ausführen und deren Düsen auf ein bestimmtes Intervall in der fraglichen Richtung verteilt sind, um auf das Band thermisch zersetzbare Metallverbindungen in Form eines Metalloxidfilms aufzubringen, und mit Absaugorganen für die Abgase nahe der Oberfläche des Flachgasbandes, dadurch gekennzeichnet, daß der Zerstäubungsraum durch querverlaufende Absaugöffnungen in mehrere Unterräume unterteilt ist, die nicht nur stromaufwärts und stromabwärts (20) der Düsen in Transportrichtung (A) des Flachglasbandes (G), sondern auch in ihrem Intervall (20a, 20b) angeordnet sind.

2. Vorrichtung zum Auftragen eines Metalloxidfilms auf die Oberfläche von Flachglas nach Anspruch 1, gekennzeichnet durch längsverlaufende Trennplatten (22), die entlang einer Richtung (B) in festen Abständen senkrecht zur Transportrichtung (A) des Bandes zur Unterteilung der Zerstäuberräume in Längsrichtung verteilt sind.

3. Vorrichtung zum Auftragen eines Metalloxidfilms auf die Oberfläche einer Glasplatte nach einem der Ansprüche 1 und 2, dadurch gekennzeichnet, daß jede Absaugöffnung (20, 21) aus geringem Abstand parallel zueinander stehenden Holzplatten (18) besteht.

0 012 679

FIG_1

FIG_2

1

FIG_3

FIG_4

0 012 679

FIG_5

FIG_6

FIG_7

0 012 679